# EUROPEAN PATENT APPLICATION

(11) **EP 1 956 518 A1**
(43) Date of publication of application: **13.08.2008**
(21) Application number: 08151099.2
(22) Date of filing: 06.02.2008
(51) Int. Cl.: G06K 9/20

(54) **Computer assisted method for processing accounting operations and software product for implementing such method**

(30) Priority: 07.02.2007 EP 07101891
(71) Applicant: WinBooks s.a., 1348 Louvain La Neuve (BE)
(72) Inventor: De Preter, Pierre, 1332 Genval (BE)
(74) Representative: Leherte, Georges M.L.M.

(57) **Abstract**

The invention relates to A computer assisted method for automatically extracting, processing and recording accounting data from scanned incoming invoices, by means of template masks or data recognition, wherein said accounting data are extracted by a combination of
(1) automatically looking up predefined labels or keywords on the invoice text and extracting said accounting data in the vicinity of the labels or keywords , and / or
(2) automatically looking up one or more unique emitter identifiers on the invoice text, and extracting said accounting data by applying one or more template masks from a template mask database associated to any found emitter identifier(s), whereas in case of multiple template mask definitions for the same emitter an intelligent process selects the best match, and, in case of non success of (1) and (2),
(3) interactively generating a template mask, by having a user of the method point relevant zones on a scanned invoice image, to extract said accounting data, said generated template mask being automatically, or optionally interactively, indexed with at least one of said emitter identifiers, and recorded in a template mask database shared by a community of users of the method through TCP-IP means.

The invention also relates to a software product for implementing such method.

## Description

The invention relates to the area of Optical Character Recognition (OCR) as well as to the area of computer assisted accounting processes / methods ("accounting software"), which more and more tend to incorporate such OCR capability.

In the OCR state of the art, two approaches appear to coexist :
- on the one hand an approach based on a search on the invoice text (the so called "FreeForm method"), searching for occurrences of special labels (for example "Total Amount», «VAT Amount», «Vat paid", ...).
   When the method finds an occurrence, it will look up any monetary amount in the vicinity of the label found (on the right side of the label or below the label). It can also find the due date of an invoice by searching for label "due date", "to be paid before", and if found, look in the vicinity of the label for a date format: dd/mm/yyyy or dd.mm.yyyy.
   The method actually dives into the document and uses "artificial intelligence" techniques to extract the required accounting elements / relevant data for accounting operations (referred to as the "relevant accounting data") from the invoices, in function of inter-relations between and/or structures of the various elements; in this type of recognition methods there is a maximum to the recognition levels due to "exotic" invoices (involving non-standard arrangements or lack of standard search labels, etc.).
- on the other hand a very different approach (the so called "Layout Based method") based on saved masks containing the position (coordinates) of relevant fields on the invoice (linked to specific layouts of the documents being processed). This approach forces the user to take action, at an initial stage of the method, in a long and fastidious "learning phase" to generate, for the various suppliers, the invoice templates / masks-collection of rectangles with appropriate zone positions.

The two methods have their inherent drawbacks.

The FreeForm method is only effective on rather standard layouts of invoices, but when the arrangement of the fields are non standard, or lacking standard search labels used by the FreeForm method, the FreeForm method fails. The FreeForm method will achieve a maximum of 80-85 % recognition. Although the state of the art programs are said to be intelligent enough to be able to extract relevant information with no prior training, the problem is that if the program fails to recognize correctly the invoice of a give supplier, it will always fail and lead to frustration on the user side. And, given the actual state of the technology, FreeForm systems, even the best, fail on more then 15 % of the invoices.

The layout based method on the other hand involves a learning phase with fastidious interventions of the user. In state of the art systems, the user must thus for each new supplier describe the positions of all fields. This is a tedious work, and if not done, nothing can be recognized for this supplier.

It is the objective of the present invention to provide an improved method for processing accounting operations which avoids these drawbacks of the state of the art methods.

To meet this objective the invention provides a computer assisted method for automatically extracting, processing and recording accounting data from scanned incoming invoices, by means of template masks or data recognition, wherein said accounting data are extracted by a combination of
(1) automatically looking up predefined labels or keywords on the invoice text and extracting monetary amounts in the vicinity of the labels or keywords (in particular by a so called "freeform" method), and/or
(2) automatically looking up unique emitter identifiers on the invoice text (such as in particular the invoice emitters' VAT number, or Bank number, or an extra key present on the invoice and uniquely identifying the emitter) and extracting said accounting data by applying one or more template masks (in particular by a so called "Layout" method) from a template mask database associated to any found emitter identifier(s), whereas in case of multiple template mask definitions for the same emitter an intelligent process selects the best match, and, in case of non success of (1) and (2),
(3) interactively generating a template mask by having a user of the method point (in particular with a mouse) relevant zones on a scanned invoice image to extract said accounting data, said generated template mask being automatically, or optionally interactively, indexed with at least one of said emitter identifiers, and recorded in a template mask database shared by a community of users of the method through TCP-IP means (internet).

The invention thus, in other words, provides a computer assisted method for processing accounting operations, comprising recording a plurality of relevant accounting data from incoming invoices into appropriate memory fields of a processing software for said method and integrating said data in the accounts processed by the method, wherein said recording of a plurality of relevant accounting data from incoming invoices is carried out automatically, based on a digital scans of said invoices, by means of data or template recognizing software, which method comprises the *use of a set* of template masks which is interactively updated and shared between a plurality of users through TCP-IP exchange means, whereas said automatic recording of a plurality of relevant accounting data from said digital scans of invoices is carried out by means of format recognizing software and by means of said set of template masks applied to said scans, whereas recognition involves the use of unique invoice emitter identifiers for the format recognition and for the template masks, and in that new template masks are interactively generated in case of recognition failure and added to said set of template masks.

It is indeed an essential feature of the invention to combine the performance of a 'preset template mask'-type method (so called Layout Based method) and a 'format recognizing'-type method (so called FreeForm method) for recognizing relevant data for accounting operations, from any type of invoices. The two methods are complementary because when the freeform fails to recognize a field properly, the layout method will give the answer if the position of the field was previously recorded. Combining both methods allows to reach far superior levels of recognition.

The method according to the invention also avoids the need for a training phase, as inherent to the Layout method: recording of field positions is done "on the fly when the user shows the relevant information on the invoice.

The combination and integration of the two types of methods has been found to involve a synergetic effect and to provide far superior recognition levels compared to those obtained by each method separately.

It is also an essential feature of the invention to continuously record / memorize improvements / new templates as they are being generated in order to generate / expand the database / library of templates. If, for instance, the due date is not found by the FreeForm method, it is possible to very simply overcome this by pointing at the position of the due date with the mouse: the program will remember (save) the coordinates of the due date in a mask database. Next time an invoice of this supplier is processed, the coordinates of the due date are looked up in the mask database.

The generation of new templates allows for a continuously improving performance and recognition level of the method according to the invention, referred to as the intelligence / learning property of the method.

A further essential feature of the invention is also the sharing of such database / library between a maximum of users via Internet, in order to achieve, the fastest possible, most complete, increasing number of significant templates / suppliers cq. supplier- linked templates.

Definitions of new templates are shared between all users of the system through a internet database. In such a way each user will bring his contribution to the community and will receive in return the masks as defined by the other users. In this way the recognition rate should increase very rapidly and reach its peaks as soon as the library of masks starts to cover a significant number of suppliers.

The idea is to centralize a maximum of the masks made by the whole of the community of the end-users of the method.

The system rests on the principle of exchange: "if I agree to make my masks available, I receive in exchange the masks of the other users".

One can thus very quickly expect an exponential growth of the number of centralized recognized masks. The principle of internet centralized masks sharing generates a potential substantial increase of the recognition rate of invoices. The advantage is even greater for a new end-user who starts to use the method, even if he did not define one mask yet.

Each of these approaches as well as their association in one combined system must be regarded as pioneering in the areas of electronic management / dematerialization of administrative documents, Automatic Invoice Reading ("AIR", or "LAF" in French), and the IT world in general.

Whereas known programs provide the user with an imposed exhaustive and rather "heavy" definition of a mask, the method according to the present invention continuously records the improvements made by the user.

According to a specific embodiment of the invention, the TCP-IP exchange means of the computer assisted accounting method most suitably interact with a dedicated server managing said shared template mask database.

According to a further preferred feature of the invention the invoice emitter identifiers may be based on invoice emitters' VAT n°, bank account n° and / or company n°.

A supplier can however also be identified by a Label on the invoice which can also function as a unique label (previously supplied by the user and uniquely identifying the supplier, for example the email address).

In its preferred embodiments the method according to the invention offers the following capabilities:
when an invoice zone is inadequately recognized, the user has just to pass over that zone with the mouse, to click and simply indicate to the program which type of zone is involved:
   the method according to the invention will then complete the database of invoice masks, with the position of the zone on the invoice;
   next time the method according to the invention will be able to extract correctly said zone at the specified position;
   this database / library of masks is thus supplied in an interactive manner by the users of the method.

In a multi-user environment, such as an accountant office, the library of masks can be shared by the individual users :
when one user improves the mask of a supplier, this information is immediately available and re-calculated in real time for the other users working on another file.

The invention also specifically covers a software product for automatically extracting, processing and recording accounting data from scanned incoming invoices, comprising template masks or data recognition, which software product comprises
(1) means for automatically looking up predefined labels or keywords on the invoice text and extracting monetary amounts in the vicinity of the labels or keywords (in particular so called "freeform" method software means),
(2) means for automatically looking up one or more unique emitter identifiers on the invoice text (such as in particular the invoice emitters' VAT number, or Bank number, or an extra key present on the invoice and uniquely identifying the emitter), and extracting said accounting data by applying (in particular with so called "Layout" method software means) one or more template masks from a template mask database associated to any found emitter identifier(s),
(3) intelligent processing means to select the best match in case of multiple template mask definitions for the same emitter,
(4) means for interactively generating a template mask, by having a user of the method point (in particular by means of a mouse) relevant zones on a scanned invoice image, to extract said accounting data,
(5) means for automatically, or optionally interactively, indexing such generated template masks with at least one of said emitter identifiers, and
(6) TCP-IP exchange means for automatically recording such generated template masks in a template mask database shared by a community of users of the software product (in particular through internet).

The invention thus, in other words, also covers a software product for automatically recording specific data from incoming invoices into appropriate memory fields, based on a digital scan of said invoice, wherein said software means comprise data or template recognition means to be applied to said scan, wherein said automatic recording software means comprise a set of template masks, means for interactively updating and expanding said set template masks, means for sharing said set of template masks between a plurality of users through TCP-IP exchange means, means for automatically recording a plurality of relevant accounting data from said digital scans of invoices by format recognition and by template mask recognition, involving the use of one or more invoice emitter identifier for the format recognition and for the template mask recognition.

In a preferred embodiment of the software product according to the invention, said TCP-IP exchange means are most suitably provided to interact with a dedicated server managing said shared template mask database.

According to a further preferred feature of the software product according to the invention, the common invoice emitter identification labels are based on invoice emitters' VAT n°, bank account n° or any other unique key present on the invoice.

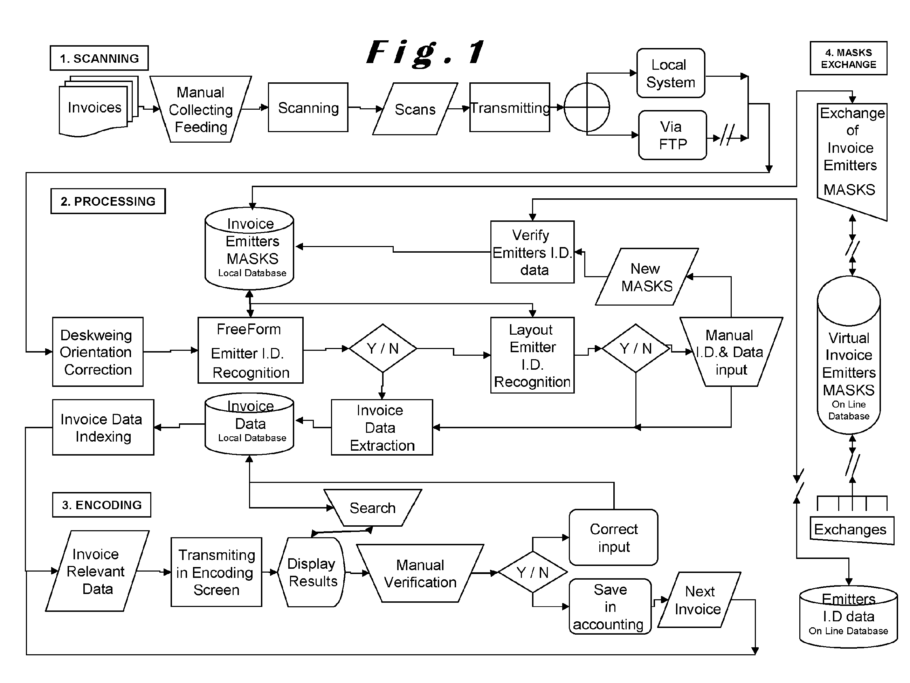

Still further features and details of the invention will become apparent from the description of a preferred embodiment of the invention given here below, having reference to the attached tables, in which
Figure 1 shows a detailed organigram for implementing the method according to the invention, and
Figure 2 shows a convenient structure for a masks database for the method according to the invention

The working principles of this specific example of the method according to the invention involve the following aspects :

In a first exploration step the "identifier" (identification parameter) of the invoice generator (the "supplier") is found (VAT number, bank account number, or any optional additional "key" defined by the user.

On the basis of this number the masks database is scanned for extracting any mask already defined for this supplier.

If necessary the mask is applied to the invoice with any required adjustments, due, for instance, to any shifts that may have occurred during scanning (so called "deskewing").

It is during update procedures of the used software version (as known per se for this kind of programs), that the user not only receives, inter alia, the newest version of the FreeForm script, but also the masks that have been interactively elaborated by the other users.

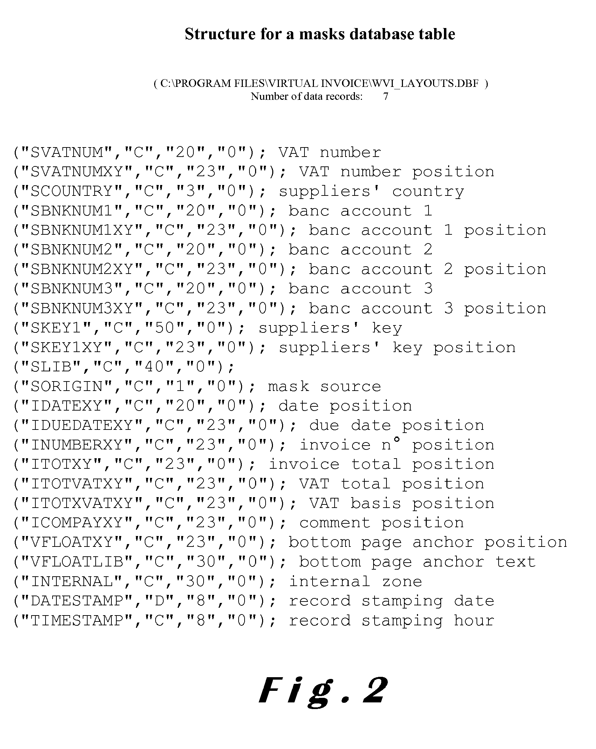

An example of a preferred structure for a database of masks is given in the attached figure 2.

### Detailed description of the specific method according to the invention

### 1. Actors:

→ Administrator of Internet central database: Winbooks s.a.
→ Users of local database: community of the end-users of the method.

### 2. Hardware principle:

→ The internet central database, at administrator level, is lodged on a machine dedicated to this exclusive use.
→ The downloaded masks at the time of the update, at end-user level, are stored in the end-user's local database ('metaform' files).

### 3. Process in 4 Stages:

* At the start of method, the software proposes an update via an "Assisting" style dialogue box. It precisely explains the objectives of the exchange of the masks, clearly mentions to end-user that in no case his personal masks will not be altered /deteriorated by this operation.
   The end-user can also at this stage set the parameters regarding the frequency of the updating process (i.e. once per week...).
* At the start of the updating process, various parameters ( which ones...) are checked and the connection to the Internet database is then carried out.
* The download phase is started, thanks to a "TimeStamp" mechanism only the new masks are locally downloaded in the "metaform" file It should be noted that if, for an unspecified reason, the "metaform" file would not be present or would be corrupted, it is then completely regenerated
* Then, an upload of the personal masks of the end-user (WVI_LAYOUTS file) is processed towards the Internet data base.
   There too with a view for optimization, a "TimeStamp" makes it possible to select only the new ones or the last by the user modified masks since his last update.

### 4. The Filters and Validation of the uploaded masks

* A search is carried out in the Internet database in order to control that one or more masks having the same identifier does not exist.
* A maximum of 5 different masks having the same identifiers are authorized, indeed, it may occur that one supplier has several invoice layouts or that the layout was modified.
   When the limit of 5 masks is reached, the principle of the FIFO queue is used: First in, First out, i.e. the oldest mask is deleted to allow its replacement by the new mask.
* For are each exported mask, data allowing to identify the end-user are saved in order to prevent any wrong doing with intention to corrupt the system (i.e. sending of wrong/erroneous masks....).
* In the same spirit, the administrator of the Internet database has the right to export masks or lock masks in the Internet database with an "administrator" status.
   With this status, per nature, those masks will not be able to be deleted or removed by those of the end-users.
* At the end of the update process, a report is showing the number of exported masks as well as the imported. ones

### Result :

Reminder : 2 operations are carried out when processing the invoices, the complete text recognition by the Optical Character Recognition method and the execution of a "FreeForm» script necessary to extract the accounting zones of the invoice.

Just after this second phase, a "lookup" is carried out in the file containing Internet masks (Metaform) in order to select the masks having for identifiers the number of VAT and/or the bank accounts found on the invoice in the course of process.

Thanks to a results weighting system (validity of the dates, amounts...), only one mask is selected.

For each zone of the invoice, a comparison between the results coming from the "FreeForm" script and from the Internet mask is carried out.

That makes thus possible to avoid a regression of the productivity in case the Internet mask would be erroneous.

When the value coming from Internet mask is preferred to the one found by the "FreeForm" script, an "Internal" tag is added to other information in the xml file and its value is put at 1 (one), the single (GUID) identifier of Internet mask is also saved.

That enables the administrator of the Internet database to potentially locate an erroneous mask in the Internet database and to proceed with the correction.

At the time of the consultation of the document, of course if a personal mask of the end-user exists, it is this latter mask which has precedence.

It should be observed that in the method according to the invention as set forth here above, there can be different templates of the invoice of a supplier.

This can happen when there are different departments or branches of the company using different layouts, or if the layout of the supplier has changed. How does the program select one template among the others: it simply selects the best match, this means the mask that gives the best recognition results. For example, if a given mask applied to the invoice retrieves only the Total Amount, and the other retrieves the total Amount, the vat amount, the base amount and the due date, this mask will be preferred because it offers the best match.

The method involves algorithms that can evaluate the accuracy of the information retrieved: for example, due date must be later than or equal than the date of the invoice, base amount + vat amount must equal total amount of the invoice.

It must also be observed that the identifier is never extracted neither by the freeform method, nor by the layout method but by examining the whole extracted text of the invoice.

The method looks at patterns of structured digits to identify the emitter. For example, the VAT number is of a fixed number in each country, with usually 2 check digits at the end. The same with bank account numbers. So, by examining the text of the invoice, the method is able to retrieve these structured numbers with very good results, except when the information is not present on the invoice, or when it is unreadable for the OCR. In that case, the method can still identify an emitter by looking at the unique label, as explained more above.

The method thus involves that templates can be improved, first because layouts can be changed by the emitter, and next because the method allows recording of partial templates. For example, first time the method only records the Total Amount position, next time the method will also indicate the position of the amount of "discount" on the invoice.

And when the user wants to save the position of a previously saved field, the program asks: "This position has already been recorded. Is that the position for a new layout, or is it suppose to replace (correct) the existing one? "

In that sense, templates are continuously improved.

And last, but not least, all the fundamental advantages of the method according to the invention are amplified in a synergetic way by its "internet functionality" : with each individual user enriching its database of templates, the method involves the concept to share this database on the internet; the contribution of each individual is consolidated on an internet accessible database, and the templates defined are made accessible to the community of users, thereby leading to enhanced recognition results.

## Claims

1. Computer assisted method for automatically extracting, processing and recording accounting data from scanned incoming invoices, by means of template masks or data recognition, **characterised in that** said accounting data are extracted by a combination of
(1) automatically looking up predefined labels or keywords on the invoice text and extracting monetary amounts in the vicinity of the labels or keywords, and
(2) automatically looking up unique emitter identifiers on the invoice text and extracting said accounting data by applying one or more template masks from a template mask database associated to any found emitter identifier(s), whereas in case of multiple template mask definitions for the same emitter an intelligent process selects the best match, and, in case of non success of (1) and (2),
(3) interactively generating a template mask by having a user of the method point relevant zones on a scanned invoice image to extract said accounting data, said generated template mask being automatically, or optionally interactively, indexed with at least one of said emitter identifiers, and recorded in a template mask database shared by a community of users of the method through TCP-IP means.

2. Computer assisted accounting method according to claim 1, **characterised in that** said TCP-IP exchange means interact with a dedicated server managing said shared template mask database.

3. Computer assisted accounting method according to any one of the preceding claims, **characterised in that** said emitter identifiers are based on invoice emitters' VAT n°, bank account n° or any other unique key present on the invoice.

4. Software product for automatically extracting, processing and recording accounting data from scanned incoming invoices, comprising data recognition or template mask means, **characterised in that** said software product comprises
(1) means for automatically looking up predefined labels or keywords on the invoice text and extracting monetary amounts in the vicinity of the labels or keywords,
(2) means for automatically looking up one or more unique emitter identifiers on the invoice text and extracting said accounting data by applying one or more template masks from a template mask database associated to any found emitter identifier(s),
(3) intelligent processing means to select the best match in case of multiple template mask definitions for the same emitter,
(4) means for interactively generating a template mask, by having a user of the method point relevant zones on a scanned invoice image, to extract said accounting data,
(5) means for automatically, or optionally interactively, indexing such generated template masks with at least one of said emitter identifiers, and
(6) TCP-IP exchange means for automatically recording such generated template masks in a template mask database shared by a community of users of the software product.

5. Software product according to claim 4, **characterised in that** said TCP-IP exchange means are provided to interact with a dedicated server managing said shared template mask database.

6. Software product according to any one of claims 4 - 5, **characterised in that** said emitter identifiers are based on invoice emitters' VAT n°, bank account n° or any other unique key present on the invoice.
